(19) Europäisches Patentamt

European Patent Office

Office européen des brevets

(11) Veröffentlichungsnummer: **0 319 941**
**A1**

(12) **EUROPÄISCHE PATENTANMELDUNG**

(21) Anmeldenummer: **88120417.6**

(22) Anmeldetag: **07.12.88**

(51) Int. Cl.⁴: **H02J 7/34 , G01B 3/20**

(30) Priorität: **10.12.87 CH 4840/87**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **Weber, Hans Rudolf**
**10, chemin dur Grillon**
**CH-1007 Lausanne(CH)**

(72) Erfinder: **Weber, Hans Rudolf**
**10, chemin dur Grillon**
**CH-1007 Lausanne(CH)**

(74) Vertreter: **Gasser, François W.**
**Postfach 1555**
**CH-3001 Bern(CH)**

(54) **Verfahren für die Stromversorgung von mit Solarzellen betriebenen elektronischen Schaltungen und Anordnung zur Durchführung des Verfahrens.**

㊼ Um einen durch Solarzellen (1, 2, 3, 4) mit der benötigten Energie versorgten elektrischen oder elektronischen Verbraucher (M) auch bei ungünstigen Lichtverhältnissen und/oder kurzen Ausfällen des Sonnenkollektors (S) ununterbrochen mit der notwendigen elektrischen Energie zu versorgen, wird eine Elektronik vorgeschlagen, die zwischen dem Sonnenkollektor (S) und dem Verbraucher (M) sowie einem Speicher (C1) für elektrische Energie einen Regelkreis (RK) aufweist, der zumindest als Zu- und Umschalter wirkt, der in Abhängigkeit der Spannung (US) am Sonnenkollektor (S) und einer definierten Betriebsspannung (UM) am Verbraucher (M) sowie des Ladezustandes des Speichers (C1) unter Priorisierung der Erstellung der Betriebsbereitschaft des Verbrauchers (M) den Sonnenkollektor (S), den Speicher (C1) und den Verbraucher (M) untereinander verbindet. Dadurch können einerseits kurzfristige Ausfälle des Sonnenkollektors (S) mangels genügend Licht überbrückt werden. Andererseits kann vermieden werden, dass dem Verbraucher (M) erst dann genügend elektrische Energie zur Verfügung steht, wenn der Kondensator (C1) durch den Sonnenkollektor (S) auf die Betriebsspannung (UM) aufgeladen worden ist. Die Erfindung ermöglicht damit, die Nachteile der bekannten solarzellenbetriebenen Geräte, zu eliminieren und das Licht als Energiequelle für elektrische Verbraucher optimal auszunützen.

Fig.5

Die vorliegende Erfindung betrifft ein Verfahren für die Stromversorgung von mit Solarzellen betriebenen elektronischen Schaltungen und eine Anordnung zur Durchführung des Verfahrens gemäss den Oberbegriffen der Patentansprüche 1 und 5. Weiter betrifft die Erfindung eine Anwendung einer Stromversorgung von mit Solarzellen betriebenen elektronischen Schaltungen gemäss Patentanspruch 8.

Netzunabhängige elektrische und elektronische Geräte, teilweise auch solche mit Digitalanzeigen, sind seit langem bestens bekannt. In der Regel werden ihre Schaltungen und Anzeigen, bei denen es sich üblicherweise um Flüssigkristallanzeigen handelt, auch heute noch durch Batterien oder Akkumulatoren mit Spannung und Strom versorgt. Dies insbesondere dann, wenn sichergestellt werden muss, dass die Stromversorgung der Schaltung und/oder der Anzeige über längere Zeit ununterbrochen garantiert ist, selbst unter ungünstigen Lichtverhältnissen. Daher haben sich solarzellenbetriebene Geräte, insbesondere Messgeräte, bis heute nicht oder nur marginal durchsetzen können. Die Verwendung von Batterien stellt gemäss heutigen Erkenntnissen eine Belastung für die Umwelt dar, insbesondere, wenn sie nicht fachgerecht entsorgt werden. Bei den Anwendungen, wo Solarzellen erfolgreich eingesetzt werden, handelt es sich in der Regel um die Speisung von Schaltungen mit sehr geringem Energiebedarf, die nur ab einer gewissen Beleuchtungsstärke funktionieren müssen. In der Dunkelheit geht bei diesen Schaltungen die Information verloren und die Anzeige verschwindet. Bei Anwendungen, bei denen Lichtunterbrüche überbrückt werden müssen, dienen die Solarzellen dazu, Akkumulatoren aufzuladen, die dann ihrerseits die Stromversorgung der Schaltung und/oder der Anzeige sicherstellen. Ein wesentlicher Nachteil solcher Geräte besteht darin, dass sich bei längerem Betriebsunterbruch, resp. längerer Dunkelheit, die Akkumulatoren entladen und eine Wiederaufladung in der Regel mehrere Stunden dauert, was eine Nichteinsatzfähigkeit des Gerätes während längerer Zeit am Anfang des Ladezyklus zur Folge hat.

Der vorliegenden Erfindung liegt einerseits die Aufgabe zugrunde, ein Verfahren für die Stromversorgung von mit Solarzellen betriebenen elektronischen Schaltungen und andererseits eine Anordnung für die Durchführung des Verfahrens zu schaffen, die es einerseits ermöglichen, alle Vorteile der elektronischen Messgeräte voll auszunützen, die es andererseits aber auch ermöglichen, die Nachteile jener Geräte zu vermeiden, die mittels Batterien und direkt geschalteten Akkumulatoren mit elektrischer Energie versorgt werden. Im Rahmen dieser Aufgabe soll die erfindungsgemässe Anordnung zusätzliche Funktionen übernehmen können und z.B. den Verbraucher auch bei zeitweiliger Finsternis mit Spannung und Strom versorgen. Sie soll in einer vorteilhaften Ausführungsvariante aber auch in der Lage sein, die Betriebsspannung des Messgerätes über eine bestimmte Zeitdauer konstant zu halten, unabhängig davon ob die Solarzellen Strom und Spannung liefern oder nicht. Weiter soll die erfindungsgemässe Anordnung in einer weiteren Ausführungsvariante als Spannungsbegrenzer für den Speicher dienen. Weiter soll sie in der Lage sein, den Verbraucher abzuschalten und ein weiteres Entladen des Speichers zu verhindern, wenn eine vorgegebene minimale Spannung nicht mehr erreicht wird.

Erfindungsgemäss wird diese Aufgabe einerseits durch ein Verfahren gemäss Patentanspruch 1 und andererseits durch eine Anordnung in Form einer Elektronik gemäss Patentanspruch 5 gelöst. Weiterausgestaltungen des erfindungsgemässen Verfahrens und der erfindungsgemässen Elektronik sind in den abhängigen Ansprüchen definiert. Eine vorteilhafte Anwendung einer solarzellenbetriebenen elektronischen Schaltung ist im Patentanspruch 8 beansprucht. Der Fachmann erkennt, dass damit erfindungsgemäss die drei Komponenten Sonnenkollektor, Speicher und Verbraucher quasi in einem Dreieck zusammenschaltbar sind, derart, dass in Abhängigkeit der vorbestimmten (und unveränderlichen) Betriebsspannung des Verbrauchers und den variablen Produktions- resp. Ladezuständen des Sonnenkollektors und des Speichers für elektrische Energie, jeweils jene Komponenten zusammengeschaltet werden, die gemäss den aktuellen Gegebenheiten in Priorisierung der Erstellung der Betriebsfähigkeit des Verbrauchers optimal betrieben werden können.

In der folgenden Beschreibung werden die diversen Aspekte der Erfindung anhand der Zeichnung beispielsweise erläutert. In der Zeichnung zeigt

Fig. 1 einen Messschieber mit digitaler Anzeige auf Flüssigkristallbasis und mehreren Solarzellen,

Fig. 2 eine bekannte rudimentäre Schaltung zum Betrieb eines elektrischen Verbrauchers mittels Solarzellen,

Fig. 3 eine bekannte erweiterte Schaltung mit aufladbarem Speicher und Spannungsbegrenzung,

Fig. 4 schematisch eine weitere bekannte Schaltung mit Solarzellen, Speicher, Verbraucher und Serieregelkreis,

Fig. 5 eine vorteilhafte Ausgestaltung der erfindungsgemässen Anordnung in Form einer Elektronik mit Regelkreis,

Fig. 6 den prinzipiellen Aufbau des Regelkreises in Form eines Blockschaltbildes, und

Fig. 7 Zeitdiagramme der Spannungen und Reglerfunktionen der erfindungsgemässen Elektronik, bei einem hypothetischen Beleuchtungsverlauf der Solarzellen.

Zur Lösung der erfindungsgemässen Aufgabe wird einerseits ein Verfahren vorgeschlagen, gemäss welchem in Abhängigkeit der von den Solarzellen, resp. dem aus diesen gebildeten Sonnenkollektor, abgegebenen Spannung und Stromstärke sowie dem Ladezustand des Speichers und der Betriebsspannung des zu versorgenden Verbrauchers entweder nur der Sonnenkollektor, vorteilhafterweise über einen Spannungsregler, mit dem Verbraucher zusammengeschaltet wird, oder aber nur der Speicher, vorteilhafterweise ebenfalls über einen Spannungsregler. Der Sonnenkollektor kann auch nur mit dem Speicher verbunden werden, um diesen aufzuladen, wenn aus dem Sonnenkollektor nicht genügend Energie bezogen werden kann, um den Verbraucher zu betreiben. Damit kann erreicht werden, dass jedes für die Spannungs- und Stromerzeugung genügende Licht, das auf die Solarzellen auftrifft, optimal genutzt wird, entweder, um den Verbraucher, bei dem es sich in der Regel um eine Messelektronik handeln wird, zu betreiben, oder den Speicher, bei dem es sich um einen Stromspeicher mit variabler oder konstanter Spannung, vorteilhafterweise um einen Kondensator, handeln kann, zu laden. Dabei wird der Versorgung des Verbrauchers vor dem Aufladen des Speichers Priorität eingeräumt, um die Zeitspannen, in denen der Verbraucher nicht betriebsbereit ist, möglichst klein zu halten und auf die Zeiten zu beschränken, da mangels genügend Licht sowieso nicht gearbeitet werden kann. Weitere Aspekte des erfindungsgemässen Verfahrens ergeben sich für den Fachmann aus der Beschreibung der erfindungsgemässen Anordnung, die hiernach generell Elektronik genannt wird.

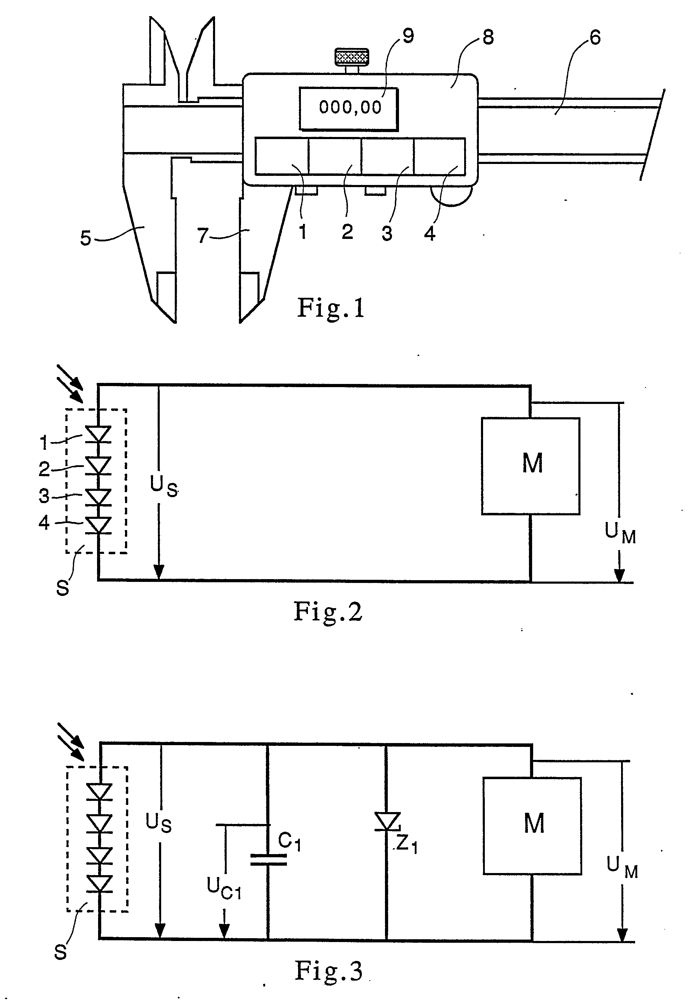

In Fig. 1 erkennt man einen digitalen Messschieber mit einem festen Schnabel 5, einem auf einer Messschiene 6 verschiebbaren Schnabel 7, der ein Gehäuse 8 trägt, in welchem neben einem elektronischen Messsystem eine digitale Anzeige 9 aus Flüssigkristallen und ein Sonnenkollektor S aus mehreren seriell zusammengeschalteten Solarzellen 1, 2, 3, 4 untergebracht sind. Der mechanische Aufbau und die elektronische Schaltung des Messsystems sowie der Anzeige, also des Verbrauchers an sich, bilden nicht Gegenstand der vorliegenden Erfindung. Es wird daher hier nicht näher darauf eingegangen. Der Verbraucher, resp. die mit Strom und Spannung zu versorgende elektronische Schaltung wird in der folgenden Beschreibung generell mit M bezeichnet und ist auch in den Figuren 2 bis 6 entsprechend gekennzeichnet. Es braucht sich dabei übrigens nicht um ein Messsystem für einen

Messschieber zu handeln. Jede andere Messinstrumentelektronik oder elektronische Schaltung, aber auch jeder andere elektrische Verbraucher, kann bei entsprechender Auslegung durch die erfindungsgemässe Elektronik mit Spannung und Strom, also elektrischer Energie, versorgt werden. Die Anzahl und Zusammenschaltung der Solarzellen zu einem Sonnenkollektor kann dabei in bekannter Art und Weise den Bedürfnissen und Lichtvoraussetzungen angepasst werden. In Fig. 2 erkennt man eine übliche rudimentäre Schaltung zum Betrieb eines Verbrauchers M mittels zu einem Sonnenkollektor S zusammengeschalteter Solarzellen 1, 2, 3, 4. Bei dieser grundlegenden Schaltung beginnt der Verbraucher M zu funktionieren, sobald die Spannung US des Sonnenkollektors S, d.h. der seriell geschalteten Solarzellen 1 - 4, die für den Verbraucher M definierte minimale Betriebsspannung UM erreicht. Dies bedeutet, dass der Verbraucher M jeweils dann immer korrekt arbeitet, wenn genügend Licht auf den Sonnenkollektor S fällt. Da auch sehr kurzfristige Abdeckungen oder auf den Sonnenkollektor S fallende Schatten zu einem Unterbruch in der Spannungs- und Stromproduktion und folglich in der Funktion des Verbrauchers M führen, werden solche rudimentäre Schaltungen in der Regel nur für Geräte resp. Verbraucher M verwendet, bei denen ein Funktionsunterbruch keine Fehlberechnung oder -funktion verursacht. Für die Versorgung eines digitalen Messgerätes mit elektrischer Energie ist eine solche rudimentäre Schaltung allerdings nicht geeignet.

Dafür eignet sich eine Schaltung gemäss Fig. 3 bereits besser, denn ein parallel über den Sonnenkollektor S, resp. die Solarzellen 1 - 4 geschalteter Kondensator C1 wird durch den Sonnenkollektor S aufgeladen und dient als aufladbarer Speicher für Strom bei variabler Spannung. Sobald und solange die Spannung UC1 über dem Kondensator C1 gleich oder höher ist als die für das korrekte Funktionieren des Verbrauchers M notwendige Betriebsspannung UM, funktioniert dieser, selbst wenn die Solarzellen 1 - 4 kurzfristig keine genügende elektrische Energie liefern. Der Nachteil dieser bekannten Schaltung mit Speicher liegt darin, dass der Verbraucher M nicht unmittelbar nach dem Einfall von genügend Licht auf die Solarzellen 1 - 4 zu funktionieren beginnt, da es dazu zuerst der Aufladung des Kondensators C1 auf die Betriebsspannung UM bedarf. Je nach dem, wie gross dieser Kondensator C1 dimensioniert ist und wie viel Strom und Spannung der Sonnenkollektor S abgibt, kann es recht lange dauern, bis der Verbraucher M zu funktionieren beginnt. Dafür wird sein korrektes Funktionieren auch bei kurzfristigem Ausfall der Strom- und Spannungsproduktion durch den Sonnenkollektor S nicht unterbrochen. Zur Begrenzung der Betriebsspannung UM am Eingang des Verbrauchers M kann die Verwendung einer Zenerdiode Z1 angezeigt sein.

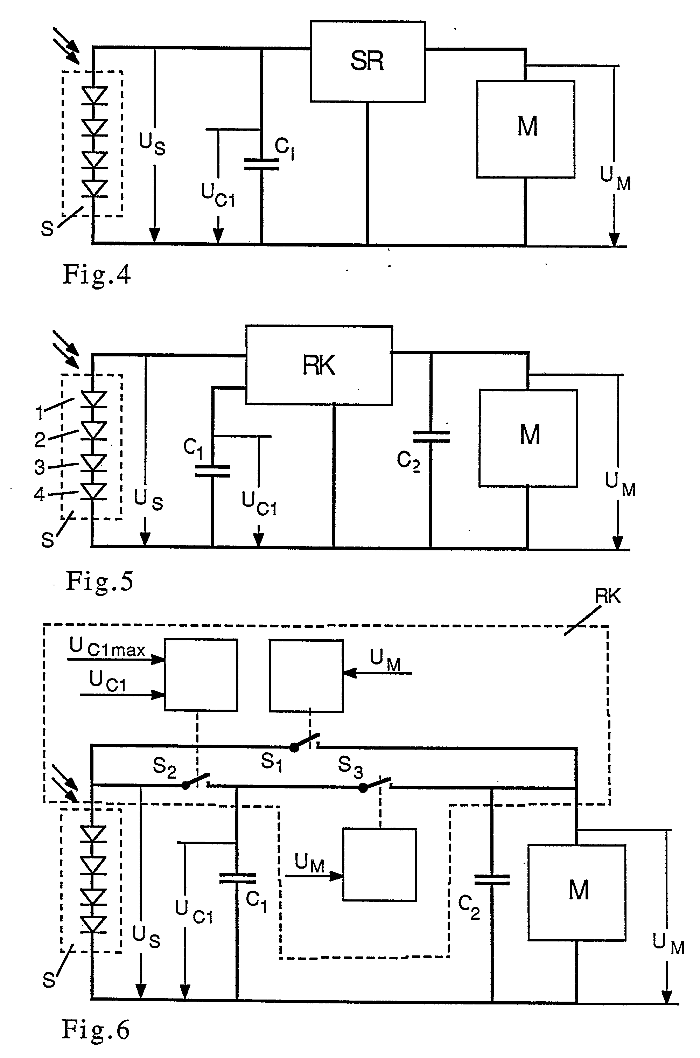

An Stelle der Zenerdiode Z1 kann gemäss Fig. 4 auch ein Spannungsregler SR, allgemein bekannt unter dem Begriff Serieregelkreis, in Form einer integrierten Schaltung verwendet werden, der die übermässige Spannung am Ausgang des Sonnenkollektors S, resp. dem Kondensator C1, nicht wie die Zenerdiode Z1 einfach in Wärme umwandelt und damit Energieverluste produziert, sondern die Spannungsdifferenz UC1 -UM steht als Reserve zur Verfügung.

Die erfindungsgemässe Elektronik weist demgegenüber gemäss Fig. 5 neben den als Strom- und Spannungslieferanten dienenden Solarzellen 1 - 4 und dem als Stromspeicher mit variabler Spannung dienenden Kondensator C1 sowie einem zweiten Kondensator C2, der der Ladungsumlagerung dient, einen Regelkreis RK auf, der zumindest dafür sorgt, dass unmittelbar nachdem die Sonnenkollektorspannung US und der Sonnenkollektorstrom, d.h. die Sonnenkollektorenergie, die für das Funktionieren des Verbrauchers M notwendigen Werte erreichen, am Eingang des Verbrauchers M die Betriebsspannung UM zur Verfügung steht. Erst wenn der Sonnenkollektor S mehr als die zum Betrieb des Verbrauchers M benötigte elektrische Energie liefert, verbindet der Regelkreis RK den Speicher, hier also den Kondensator C1 mit dem Sonnenkollektor S. Der Kondensator C1 wird daher erfindungsgemäss nur aufgeladen, wenn die zusammengeschalteten Solarzellen 1 - 4 mehr Energie abgeben, als für das korrekte Funktionieren des Verbrauchers M notwendig ist, also mit Ueberschussenergie. Sobald die Energieversorgung des Verbrauchers (M) wegen einer momentanen Abdeckung des Sonnenkollektors S oder einem zeitweiligen Lichtausfall nicht mehr gewährleistet ist, verbindet der Regelkreis RK unterbruchsfrei den Kondensator C1 mit dem Verbraucher M, derart, dass dieser auch bei Ausfall der Strom- und Spannungsversorgung durch den Sonnenkollektor S so lange weiter korrekt funktioniert, als der Kondensator C1 genügend Spannung und Strom abgeben kann.

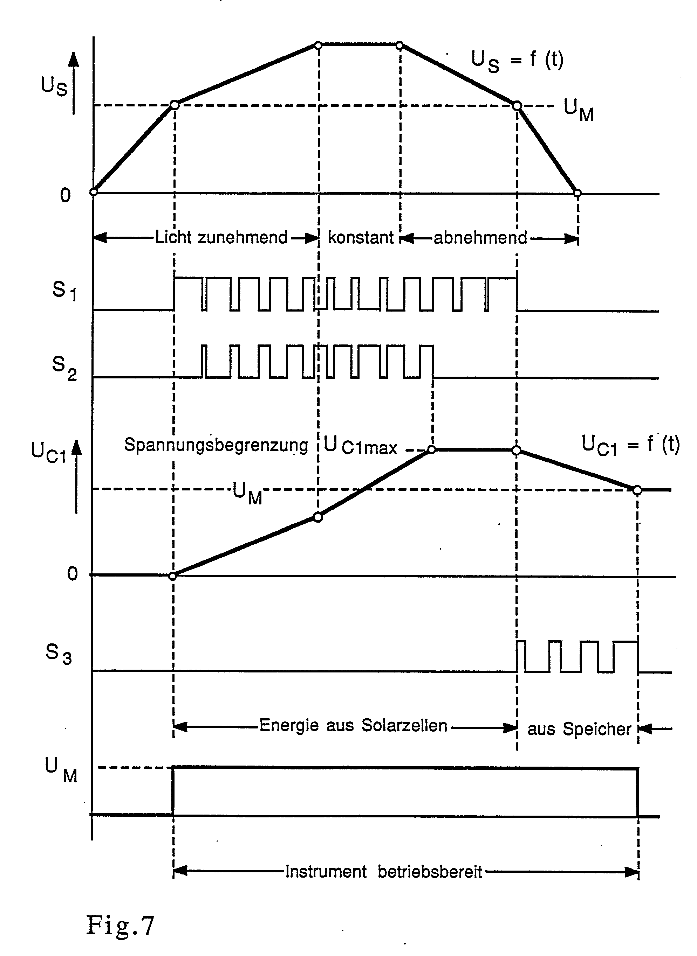

Ein derartiger Regelkreis RK ist in Fig. 6 in Form eines Blockschaltbildes dargestellt. Der Fachmann erkennt dabei einen ersten elektronischen Schalter S1, der den Verbraucher M dann mit dem Sonnenkollektor S verbindet, wenn dieser in der Lage ist, die Betriebsspannung UM und genügend Strom für das Betreiben des Verbrauchers M zu liefern. Ein zweiter elektronischer Schalter S2 schaltet den Speicher in Form des Kondensators C1 dann an den Sonnenkollektor S an, wenn dieser zumindest eine Spannung US abgibt, die höher als die Betriebsspannung UM ist und auch der produzierte Strom höher als der Betriebsstrom des Verbrauchers M ist. Bei Erreichen einer maximalen Kondensatorladespannung UC1max, also wenn der Speicher und damit der Kondensator C1 vollständig geladen ist, schaltet dieser Schalter S2 den Kondensator C1 wieder vom Sonnenkollektor S ab, um zu vermeiden, dass der Kondensator C1 wegen Ueberladung Schaden nimmt. Ein dritter elektronischer Schalter S3 dient dazu, den Kondensator C1 dann mit dem Verbraucher M zu verbinden, wenn die Spannung US über dem Sonnenkollektor S niedriger ist als die Betriebsspannung UM, die Spannung über dem Kondensator C1 aber noch mindestens der Betriebsspannung UM entspricht. Vorteilhafterweise werden die beiden elektronischen Schalter S1 und S2 gleichzeitig als Spannungsregler ausgelegt, die geregelte Ausgangsspannungen im Wert der Betriebsspannung UM abgeben. Dies kann z.B. durch Steuerung von deren Einschaltzeiten geschehen, wie dies anhand der beiden Kurven S1 und S2 und für den Schalter S3 anhand der Kurve S3 in Fig. 7 illustriert ist.

Die erfindungsgemässe Elektronik bietet bereits in ihrer hiervor beschriebenen einfachsten Ausführungsvariante gegenüber den bekannten Schaltungen gemäss den Fig. 3 und 4 den Vorteil, dass das Einschalten des Verbrauchers M durch das Aufladen des Kondensators C1, nach dessen Entladung, nicht verzögert wird.

In einer ersten erweiterten Ausführungsvariante der erfindungsgemässen Elektronik kann vorgesehen werden, dass der Regelkreis RK neben der vorbeschriebenen Funktion des Zu- und Umschaltens auch als Zeitglied arbeitet, das nach einer vorbestimmten Zeit, in der die Solarzellen 1 -4 nicht genügend Spannung abgeben, um den Verbraucher M zu versorgen, diesen oder Teile davon abschaltet, um Energie zu sparen und den Speicher, handle es sich bei diesem nun um den Kondensator C1 oder einen Akkumulator, nicht unnötig zu entladen, wenn das mit der erfindungsgemässen Elektronik versehene Gerät beispielsweise in eine Schublade gelegt wird, wo es zwangsläufig kein Licht hat und es demnach auch nicht mehr zu funktionieren braucht, respektive wenn an einem dunklen Arbeitsplatz damit gearbeitet wird, wo die digitale Anzeige mangels genügender Beleuchtung sowieso nicht abgelesen werden kann.

Alternativ kann der Regelkreis aber anstelle eines Zeitgliedes auch so ausgelegt werden, dass er gemäss den Diagrammen in Fig. 7 den Verbraucher M bei fehlendem oder ungenügendem Licht nur so lange mit elektrischer Energie aus dem Speicher, hier dem Kondensator C1, versorgt, als die Betriebsspannung UM am Verbraucher M aufrecht erhalten werden kann.

In einer zweiten erweiterten Ausführungsvariante der erfindungsgemässen Elektronik kann der Regelkreis RK so aufgebaut sein, dass er zusätzlich die Betriebsspannung UM des Verbrauchers M unabhängig vom Lichteinfall auf den Sonnenkollektor S auf einem vorbestimmten genau festgelegten Wert hält, um beispielsweise Resultatverfälschungen bei elektronischen Messsystemen zu verhindern. Ferner kann sie als Schalter für ein Warnsignal dienen, derart, dass sie bei ungenügendem Licht, also wenn der Sonnenkollektor S eine vorgegebene Spannung US nicht mehr abzugeben in der Lage ist und bevor UC1 auf UM abgesunken ist, bevor sie Teile oder den ganzen Verbraucher M abschaltet.

Der Fachmann ist anhand obiger Erläuterungen in der Lage, ohne eigenes erfinderisches Dazutun den Regelkreis RK so auszulegen, dass er weitere Funktionen übernehmen kann. Auf die detaillierte Beschreibung eines konkreten Aufbaus einzelner Blöcke in den Blockschaltbildern wird hier bewusst verzichtet, da ein qualifizierte Elektroniker anhand der beschriebenen Funktionen entsprechende Schaltungen entwickeln kann, die übrigens in einer Vielzahl von Variationen und Techniken realisiert werden können, beispielsweise als integrierte Schaltung.

Der Fachmann erkennt, dass es dank der erfindungsgemässen Elektronik erstmals möglich ist, alle Vorteile von Sonnenkollektoren mit jenen batterie- oder akkumulatorversorgter Schaltungen zu verbinden, ohne dadurch Nachteile in Kauf nehmen zu müssen. Für den Fachmann ist es auch offensichtlich, dass die erfindungsgemässe Elektronik sich nicht nur bei Messschiebern oder Messgeräten ganz allgemein einsetzen lässt, sondern in einem breiten Feld von elektronischen Geräten Anwendung findet.

**Ansprüche**

1. Verfahren für die Stromversorgung von mit Solarzellen (1 - 4) betriebenen elektrischen oder elektronischen Verbrauchern (M), dadurch gekennzeichnet, dass in Abhängigkeit der von einem aus den Solarzellen (1 - 4) gebildeten Sonnenkollektor (S) gelieferten Spannung (US) und/oder Stromstärke sowie dem Ladezustand eines Speichers (C1) für elektrische Energie und einer definierten Betriebsspannung (UM) des Verbrauchers (M) und einer frei bestimmbaren Schaltungspriorisierung einerseits der Verbraucher (M), zwecks Betrieb desselben, entweder mit dem Sonnenkollektor (S) oder dem Speicher (C1) zusammengeschaltet wird und andererseits der Sonnenkollektor (S) entweder mit dem Speicher (C1), zwecks Aufladung desselben, oder dem Verbraucher (M), zwecks Betrieb desselben, zusammengeschaltet wird.

2. Verfahren gemäss Patentanspruch 1, dadurch gekennzeichnet, dass bei Erreichen der Betriebsspannung (UM) und -stromstärke am Sonnenkollektor (S) zuerst der Verbraucher (M) mit der benötigten elektrischen Energie versorgt wird und der Speicher (C1) erst an den Sonnenkollektor (S) geschaltet wird, wenn dieser genügend elektrische Energie abgibt, um neben der Betriebsenergie für den Verbraucher (M) auch den Speicher (C1) zu laden.

3. Verfahren gemäss Patentanspruch 1, dadurch gekennzeichnet, dass der Verbraucher (M) in dem Zeitpunkt vom Speicher (C1) getrennt wird, wo dieser nicht mehr in der Lage ist, die benötigte Betriebsspannung (UM) und Betriebsstromstärke des Verbrauchers (M) zu liefern.

4. Verfahren gemäss Patentanspruch 1, dadurch gekennzeichnet, dass sowohl die vom Sonnenkollektor (S) als auch die vom Speicher (C1) stammende Spannung (US, resp. UC1) auf den Wert der Betriebsspannung (UM) des Verbrauchers (M) geregelt wird und dass ferner die maximal zulässige Ladespannung (UC1max) für den Speicher (C1) geregelt wird.

5. Elektronik zur Durchführung des Verfahrens gemäss Patentanspruch 1, insbesondere für die Stromversorgung von mit Solarzellen (1, 2, 3, 4) betriebenen elektrischen oder elektronischen Verbrauchern (M), mit zumindest einem aus Solarzellen (1 - 4) gebildeten Sonnenkollektor (S) und damit verbindbarem aufladbarem Speicher (C1) für elektrische Energie, dadurch gekennzeichnet, dass der Speicher (C1) mit einem Regelkreis (RK) verbunden ist, der zumindest als Zu- und Umschalter wirkt, der den Speicher (C1) in Abhängigkeit von der vom Sonnenkollektor (S) erzeugten Spannung (US) und/oder Stromstärke und einer definierten Betriebsspannung (UM) des Verbrauchers (M) an den Sonnenkollektor (S) und/oder den Verbraucher (M) anlegt, derart, dass einerseits der Speicher (C1) durch den Sonnenkollektor (S) nur geladen wird, wenn die vom Sonnenkollektor (S) erzeugte Energie höher ist als die benötigte Betriebsenergie des Verbrauchers (M) und andererseits der Verbraucher (M) vom Speicher (C1) mit elektrischer Energie versorgt wird, wenn die vom Sonnenkollektor (S) erzeugte Energie niedriger ist als die benötigte Betriebsenergie des Verbrauchers (M).

6. Elektronik gemäss Anspruch 5, dadurch gekennzeichnet, dass sie einen Regelkreis (RK) enthält, der zudem den Verbraucher (M) vom Speicher (C1) trennt, wenn dessen Spannung (UC1) unter die Betriebsspannung (UM) des Verbrauchers (M) fällt.

7. Elektronik gemäss Anspruch 5, dadurch gekennzeichnet, dass sie einen Regelkreis (RK) enthält, der weiter als Spannungsstabilisator für die an den Verbraucher (M) angelegte Betriebsspannung (UM) wirkt, unabhängig davon, ob die Betriebsenergie vom Sonnenkollektor (S) oder vom Speicher (C1) stammt.

8. Anwendung einer mit Solarzellen (1 - 4) betriebenen elektronischen Schaltung in einem elektronischen digitalen Messschieber.

Fig.1

Fig.2

Fig.3

Fig.4

Fig.5

Fig.6

Fig.7

EP 0 319 941 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ELECTRICAL COMMUNICATION<br>vol. 48, no. 3, 1973,<br>Seite 305 - 306; Y. ROBIN-JOUAN;<br>"Satellite optimum power conversion system"<br>* das ganze Dokument *<br><br>--- | 1 | H02J7/34<br>G01B3/20 |
| A | GB-A-2159351 (SEIKO)<br>* Seite 1, Zeile 109 - Seite 2, Zeile 64;<br>Figuren 1-4 *<br><br>--- | 1,2,5,6,<br>7 | |
| A | DE-A-2834519 (TRAUTMANN)<br>* Seite 7, Zeile 6 - Zeile 23; Figur 1 *<br><br>----- | 8 | |

RECHERCHIERTE
SACHGEBIETE (Int. Cl.4)

H02J
G01B

Der vorliegende Recherchenbericht wurde für alle Patentansprüche erstellt

| Recherchenort | Abschlußdatum der Recherche | Prüfer |
|---|---|---|
| DEN HAAG | 02 MARZ 1989 | GOETZ P.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument